# EUROPÄISCHE PATENTSCHRIFT

(11) **EP 1 785 029 B1**
(45) Veröffentlichungstag und Bekanntmachung des Hinweises auf die Patenterteilung: **17.06.2009**
(21) Anmeldenummer: 06023346.7
(22) Anmeldetag: 09.11.2006
(51) Int. Cl.: A01K 1/00, F24F 3/16

(54) **Öl-Aerosolapplikation zur Verbesserung der Luft in Nutztierställen und als Nachrüstlösung zur Emissionsreduzierung**
Oil-aerosol spraying for improving the air in animal stables and reduction of emissions
Huile-aérosol atomisation pour amélioration de l'air dans les bâtiments abritant des animaux et réduction des émissions

(30) Priorität: 12.11.2005 DE 102005054110
(43) Veröffentlichungstag der Anmeldung: 16.05.2007
(73) Patentinhaber: Hölscher, Richard, 48488 Emsbüren (DE)
(72) Erfinder: Hölscher, Richard, Dr., 48488 Emsbüren (DE); Hölscher, Werner, Dipl.-Ing., 48488 Emsbüren (DE); Büscher, Wolfgang, Prof. Dr., 53125 Bonn (DE)
(74) Vertreter: Busse & Busse Patentanwälte

(56) Entgegenhaltungen:
- WO-A-94/16554
- WO-A-03/019082
- DE-U1- 20 113 965
- US-A1- 2003 145 800
- TAKAI ET AL: 'Dust control in pig houses by spraying rapeseed oil' AMERICAN SOCIETY OF AGRICULTURAL ENGINEERS 1995, TRANSACTIONS OF THE ASEA, Seiten 1513 - 1518
- PEDERSEN ET AL: "2nd report of working group on climatization of animal houses" 1989, COMMISSION INTERNATIONALE DU GENIE RURAL
- HÖLSCHER: "Nachrüstlösungen zur Emissionsminderung dezentral entlüfteter Stallungen zur Schweinemast" 2006, FORSCHUNGSBERICHT AGRARTECHNIK DES ARBEITSKREISES FORSCHUNG UND LEHRE DER MAX-EYTH-GESELLSCHAFT AGRARTECHNIK IM VDI , BONN ISSN 0931-6264

## Beschreibung

### Aufgabenstellung

Wissenschaftliche Untersuchungen zu Abluftreinigungsverfahren in der Tierhaltungen reichen bis in die 70er Jahre zurück [1]. Die Mehrzahl der in der Praxis betriebenen Systeme setzt eine zentrale Abluftführung voraus. Grundgedanke der Erfindung ist ein Verfahren, das eine Emissionsminderung des Stalles bewirkt, indem man die Innenraumkonzentration der Schadstoffe senkt, so dass der Emissionsmassenstrom als Produkt aus Innenraumkonzentration und Abluftvolumenstrom im Vergleich zu einem Referenzsystem vermindert ist. Das Verfahren bzw. die Anlage soll einfach und über die Anwendbarkeit in zentral entlüfteten Stallungen hinaus auch für dezentral entlüftete Stallungen nachrüstbar sein. Durch die Konzentrationssenkung der Schadstoffe (insbesondere Staub und Ammoniak) im Stall kann eine positive Wirkung hinsichtlich Gesundheit bzw. Befinden bei Tier und Mensch - verstärkt durch die gezielte Bekämpfung der Bakterien, Pilze und Viren in der Stallluft - und eine Minderung der umweltrelevanten Emissionen des Stalls bewirkt werden.

### Stand der Technik

Steht die **Staubminderung** aufgrund der gesundheitsbeeinträchtigenden Wirkung von Staub bei Langzeiteinwirkung (Farmerlunge) und der zunehmenden Beachtung durch die Öffentlichkeit (Feinstaubdiskussion) im Fokus der Betrachtung, sind die Verfahren zum Versprühen pflanzlicher Öle im Stall sehr vielversprechend. Erste Versuche hierzu wurden bereits 1985 in Dänemark durchgeführt [2]. Das Verfahren wurde in den Folgejahren hinsichtlich eingesetzter Ölmengen und Ausbringungstechnik von Forschungseinrichtungen in Dänemark, den USA und Kanada optimiert. Mit Ölmengen von 5-40 ml pro Tier und Tag werden Reduzierungen der Staubkonzentration im Stall von 40-90 % erreicht. Dies gilt sowohl für Gesamtstaub als auch Feinstaub (PM10 bzw. PM5). Ausbringung der Öl-Wasser-Emulsion - meist einmal täglich - erfolgt in der Regel mittels Pflanzenschutzdüsen bzw. Sprinkleranlagen, die bei einem Druckniveau von ca. 4 bar arbeiten [3, 4]. Beim Versprühen entstehen dabei vornehmlich Tropfen und kaum Aerosole. Der Effekt der Staubreduktion wird durch das Anhaften der Staubpartikel an den mit Öl benetzten Oberflächen (Buchtengitter, Spaltenböden,...) erklärt. Abweichend von dieser Art der Anwendung wurden in Deutschland und Holland Versuche zur Staubbindung mit Öl-Emulgator-Aerosolen gemacht. Hierzu wurden zum einen Rotationsdüsen eingesetzt, wobei eine Staubreduktion im Kompoststall von 18% bei 80 ml/m² Ölmenge pro Tag erzielt wurde [5]. Zum anderen wurden Versuche im Hähnchenmaststall mit konventioneller Sprühbefeuchtung durchgeführt, die mit Hochdruck von 120 bar arbeitete. Die Staubreduktion lag im Bereich von 2-12% [6]. Der Effekt der Staubreduktion wird bei diesen beiden Verfahren dadurch erklärt, dass die Aerosoltröpfchen mit den Staubpartikeln Kondensationskeime bilden und damit die Sedimentation fördern.

Die erste Untersuchung dieser Verfahren zur Rapsölapplikation im Stall im Hinblick auf die Minderung der Staubemission des Stalls - bis dahin wurden nur Untersuchungen der Innenraumkonzentration gemacht - wurde in Kombination mit Fütterungsversuchen im Jahr 2001 durchgeführt [7].

Bei keinem der genannten Versuche konnte eine Reduktion der Ammoniakkonzentration durch Öleinsatz festgestellt werden (sofern diese mitgemessen wurde).

Patente, die eine Staubbindung im Stall zum Ziel haben sind:
- GB 2316289 "Dust binding agent applicator", bei der die Tiere durch Reiben an einem
   Ölspender eine Verteilung des Öls bewirken sollen.
- WO 9416554 "Method and apparatus for atomizing spraying of mixture of oil and water to form a liquid mist, especially with a view to laying dust in animal stables", bei der das Öl mittels spezieller Venturidüse in den Wasserstrom des Verteilsystems im Stall eingebracht wird.
- WO 9200005 "A method, a system and an agent for combating of micro dust, primarily in stables", bei dem der staubbindende Effekt durch Versprühen von Kaliumchlorid- bzw. Calciumchlorid-Lösung erzielt werden soll.

Steht die **Emissionsminderung** im Fokus der Betrachtung, kommen meist klassische Luftwäscher (chemische oder physikalische Wäscher, Rieselbettreaktoren, Biowäscher) oder Biofilter zur Anwendung. All diese Verfahren setzen jedoch eine zentrale Abluftführung des Stalles voraus. Die Verfahren sind hinreichend wissenschaftlich untersucht worden und in zahlreichen Praxiseinsätzen optimiert worden. Der Stand der Technik hinsichtlich Biofiltern ist in der VDI 3477 und hinsichtlich Biowäschern bzw. Rieselbettreaktoren in VDI 3478 im Detail beschrieben. Bau und technische Auslegung chemischer Wäscher sind in zahlreichen Lehrbüchern zur Verfahrenstechnik beschrieben, z.B. [9].

Bezüglich einer Abluftfilterung bei dezentraler Stallentlüftung gab und gibt es nur bei den Biowäschern Lösungen, die bereits 1970 eingesetzt wurden [10], sich in den Folgejahren jedoch nicht am Markt durchsetzen konnten. In jüngster Zeit sind zum Zweck einer umfassenden Minderung von Staub, Ammoniak und Geruch Mehrstufensysteme entwickelt worden, die jedoch aufgrund hoher Druckdifferenzen hohe variable Kosten durch erhöhte Lüfterleistungen mit sich bringen und eine zentrale Abführung der Stallluft voraussetzen.

Beispielhafte Patente, die eine Emissionsminderung zum Ziel haben sind:
- DE 4416687 "Biologischer Abluftwäscher" als klassische Biowäscherlösung für die Landwirtschaft
- DE 10336388 "Anlage und Verfahren zur Reinigung von Abluft aus Nutztierställen". Biowäscher mit pH-Wert-Regelung für dezentrale Stallentlüftung und der Besonderheit der Rückführung gefilterter Luft in den Stall
- DE 20113965 "Anlage zur Reinigung von Abluft, Anlage zur Reinigung von Zuluft, Anlage zur Reinigung von Zu- und Abluft und Anlage zur Reinigung von Umluft in Nutztierställen" Dreistufige Filterlösung für ausschließlich zentrale Stallentlüftung und der Besonderheit der Rückführung gefilterter Luft in den Stall

Bezüglich **Luftverbesserung** im Stall gibt es, mit Ausnahme der oben beschriebenen Verfahren zur Staubbindung, wenige Ansätze. Zu nennen wären Versuche in Dänemark, mittels Elektrostatik Staub im Stall zu binden [11]. Auch wurden in der Vergangenheit Versuche gemacht, im Umluftstrom betriebene Wäscher einzusetzen, was jedoch aus Kostengründen nicht weiter verfolgt worden ist [11]. Wird in erster Linie die **Keimminderung** bezweckt, ist häufig eine Ozon-Behandlung das Verfahren der Wahl.
Patente, die eine Luftverbesserung oder Keimminderung zum Ziel haben sind:
- US 20050123436 "Method for abatement of allergens, pathogens and volatile organic compounds" beschreibt eine Ozonbehandlung zur Keimreduzierung im allgemeinen unabhängig vom Anwendungsfeld "Stall".
- US 6276304 "Ozone injection system" hat die Ozonanwendung im Stall zum Inhalt
- WO 0193990 "Method and aggregate for cleaning of room air, particularly in livestock buildings" patentiert ein klassisches Zellstoff-Cooling-Pad als Füllkörper eines im Umluftbetrieb arbeitenden Biowäschers.

### Beschreibung und Ausführungsbeispiele

Zur Lösung der zuvor beschriebenen Aufgabe ist die erfindungsgemässe Anlage, Verfahren und Ölmischung der eingangs genannten Art dadurch gekennzeichnet, dass über eine regelbare Proportionaldosierpumpe (gleich welcher technischen Realisierung) das erfindungsgemässe Ölgemisch in den Wasserstrom eindosiert wird, dieses Gemisch (Wasser-Öl-Emulsion) auf ein Druckniveau von 25 bis 170 bar erhöht wird und über Düsenstränge im Stall vernebelt wird. Die Düsenstränge sind derart angebracht, dass eine flächige und gleichmäßige Besprühung/Einnebelung des gesamten Stalls bzw. Abteils (vom Stall lufttechnisch abgetrennte Einheit) erfolgt. Die im Verhältnis zur eingesetzten Ölmenge hohe Wassermenge dient als Trägermedium für das Öl oder die optional anderen zudosierten Substanzen (Desinfektionsmittel,...).

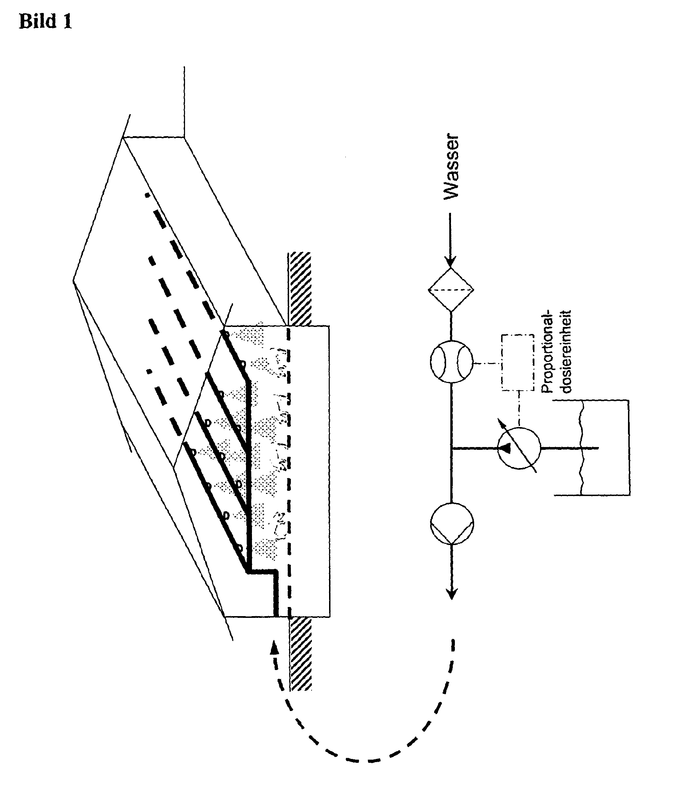

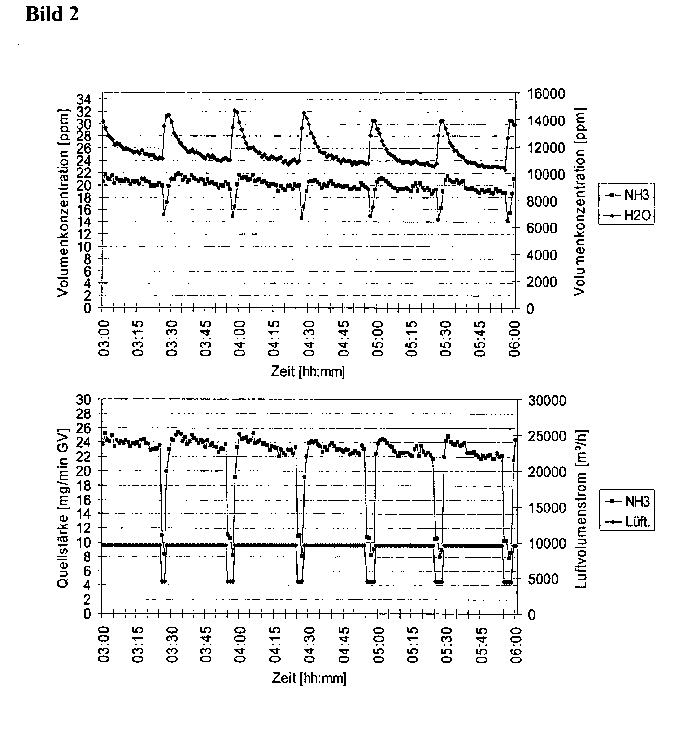

Die Anlage umfasst vorzugsweise die Komponenten Durchflussmesseinheit, Proportionaldosierpumpe, Vorratsbehälter für das erfindungsgemäße Ölgemisch, Druckerhöhungseinheit, Druckleitung, Düsenstränge und Vernebelungsdüsen entsprechend Ausführungsbeispiel aus Bild 1. Die proportionale Zudosierung wird vorzugsweise durch eine elektronisch regelbare Proportionaldosierpumpe, wie z.B. eine elektromagnetische Pumpe, erfüllt. Eine elektronische Steuerung bewerkstelligt die Intervallschaltung (vorzugsweise jede halbe Stunde für 1-2 Minuten Sprühen) und regelt die optional mögliche Einflussnahme auf die Stalllüftung. Dabei kann zur Erhöhung der Wirkungsweise die Lüftung während des Sprühzyklus heruntergeregelt und danach zeitverzögert wieder hochgeregelt werden. Dadurch werden weniger Aerosole durch die Lüftung aus dem Stall ausgetragen; respektive können alle Aerosole zu Boden sinken. Dieser Eingriff unterstützt das typische Regelverhalten einer temperaturgeregelten Lüftung. Bild 2 zeigt die Ergebnisse einer photoakustischen Messung der Innenraumkonzentration von Ammoniak und Wasser in einem erfindungsgemäß behandelten Stall. Bei Einsetzen der Vernebelung der Ölgemisch-Wasser-Emulsion sinkt die Ammoniakkonzentration im Stall durch Bindung der Ammoniakmoleküle an die fein verteilten Ölgemisch-Aerosole, die mit dem dabei gebundenen Staub zu Boden sinken. Es steigt die Wasserkonzentration bzw. Luftfeuchtigkeit durch die stattfindende Verdunstung. Die durch die Verdunstung hervorgerufene Verdunstungskühlung wiederum senkt die Stalltemperatur, wodurch die temperaturgeregelte Lüftungssteuerung automatisch den Luftvolumenstrom herunterregelt. Beide Effekte ergänzen sich zu dem dargestellten Quellstärkenverlauf für Ammoniak. Die emissionsmindernde Wirkung wird in Form des typischen "Sägezahnverlaufs" deutlich.

Über die erfindungsgemäße Anlagensteuerung kann ebenfalls optional eine tieraktivitätsbedingte Auslösung des Sprühens erfolgen. Dem liegt zugrunde, dass der größte Einflussfaktor auf die Staubentstehung im Stall die Tieraktivität ist, die mittels klassischer Bewegungsmelder erfasst werden kann [12]. So können im Stall installierte Bewegungsmelder bei erhöhter Tieraktivität und damit erhöhter Staubentstehung das Einsetzen der Anlage auslösen und damit eine sofortige Minderung der Staubkonzentration im Stall bewirken. Liegen die Zeiten erhöhter Tieraktivität fest, z.B. die Fütterungszeiten oder Kontrollgänge, kann die Anlage auch gezielt zu diesen Zeiten (per festgelegtem Zeitpunkt) aktiviert werden.

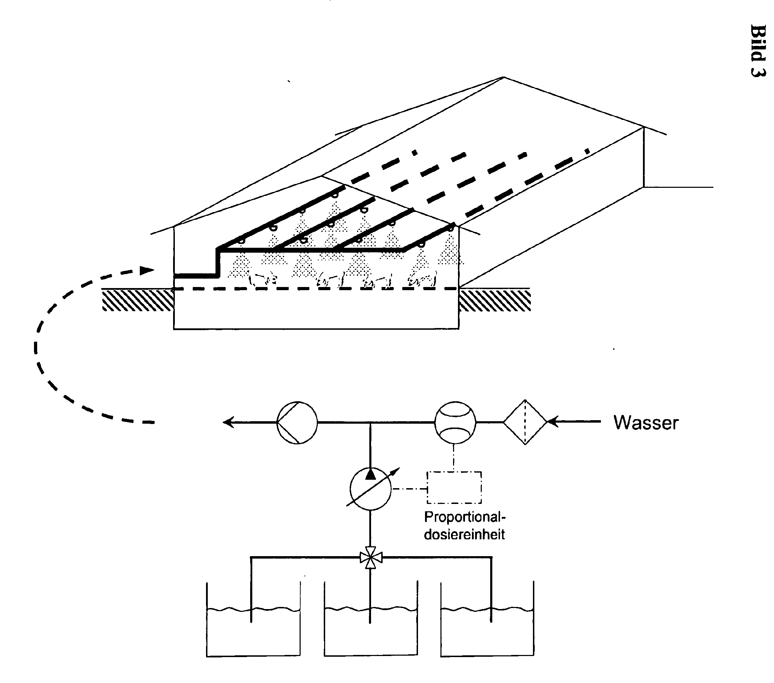

In einer Ausführungsvariante entsprechend Bild 3 kann das Anwendungsspektrum der Anlage optional erweitert werden, indem über ein Mehrwegeventil gezielt unterschiedliche Substanzen dem Sprühwasser zudosiert werden. Dies können Reinigungsmittel sein für die Stallreinigung nach Vermarktung der Schweine, Desinfektionsmittel zur Desinfizierung des Stalls vor Neuaufstallung oder getrennt voneinander gleichzeitig zuzuführende Öle.

Das erfindungsgemäße Ölgemisch setzt sich gemäß Anspruch 17 und 18 vorzugsweise zusammen aus:
ca. 70% Trägeröl, vorzugsweise Rapsöl, Sojaöl, Palmenöl, Kokosöl oder Sonnenblumenöl
20% Emulgator auf biologischer Basis
10% Ätherische Öle, vorzugsweise Cajeput, Thymian, Eukalypthus und Citronenöl

Dieses erfindungsgemäße Ölgemisch erfüllt die Aufgaben hinsichtlich Staubbindung, Schadgasneutralisierung und Hemmung/Tötung von Bakterien, Pilzen und Viren. Darüber hinaus wirkt es auf den tierischen Organismus beruhigend und durchblutungsfördernd.

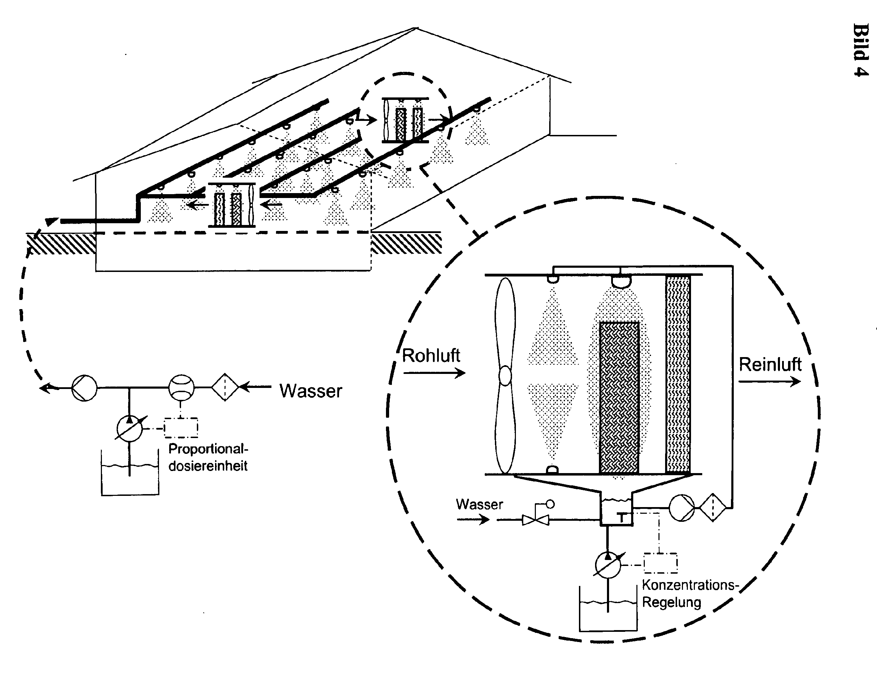

Ein weiteres Ausführungsbeispiel beschreibt Bild 4. Dabei ist das erfindungsgemäße System durch einen/mehrere Umluftwäscher ergänzt, die der spezifischen Minderung besonderer Schadgase oder Mikroorganismen (Bakterien, Pilzen oder Viren) dienen unter Zuhilfenahme chemischer Substanzen, die nicht direkt mit den Tieren & Menschen in Kontakt geraten dürfen oder aufgrund der hohen Konzentrationen einen Kontakt mit den Tieren & Menschen nicht erlauben. Dies sind vorzugsweise organische oder anorganische Säuren (Schwefelsäure, Essigsäure, Ameisensäure, Propionsäure) zur verstärkten Minderung der Ammoniakkonzentration oder Desinfektionsmittel, wie z.B. Peressigsäure, bei akutem Krankheitsgeschehen im Tierbestand. Der Umluftwäscher ist vorzugsweise als Kreuzstrom-Sprühwäscher oder Kreuzstrom-Füllkörperwäscher ausgeführt, durch den die Stallluft mittels Axialventilator hindurchgedrückt wird. Das im Kreislauf geführte Waschmedium wird mittels dargestellter Regeleinheit im vorgegebenen Konzentrationsbereich gehalten. Die Zuschaltung dieser Umluftwäscher erfolgt bedarfsgesteuert von erfindungsgemäß beschriebener elektronischer Regelung.

### Vorteile der Erfindung gegenüber dem Stand der Technik

Die Vorteile des in den Ansprüchen beschriebenen Verfahrens bezüglich Staubbindung im Stall liegen zum einen in der Aufwandsmengen-optimierten Ausbringung durch flächige Vernebelung der Ölgemisch-Wasser-Emulsion im Vergleich zu heute üblichen Verfahren. Durch die entstehenden feinen Tröpfchen und die bei jedem Sprühintervall ausgebrachte kleine Ölgemischmenge, entsteht im Stall ein sehr feiner, homogen verteilter Ölfilm. Die Summe ausgebrachten Öls ist bei gleicher Wirkungsweise im Vergleich zu den heute üblichen Verfahren geringer. Bei den in der Vergangenheit angewandten Verfahren wurde meist einmal täglich eine Ölemulsion im Stall verteilt.

Durch die häufigen aber kurzen Sprühintervalle (entsprechen den Ansprüchen) über den Tag verteilt wird zum anderen das Stallklima nicht negativ beeinflusst, die Stallluft jedoch regelmäßig von Schwebstaub und Schadgasen sowie durch die Verwendung des in den Ansprüchen 17 bis 20 beschriebenen Ölgemisches auch von Keimen (Bakterien und Pilze) und Viren befreit bzw. reduziert. Die Behandlung ist somit quasi-kontinuierlich, d.h. sobald der Effekt nachlässt, setzt das nächste Sprühintervall ein. Somit ist durch die Wahl des Ölgemisches und durch das Verfahren der Ausbringung über die Staubbindung hinaus eine Schadgasbindung und Keim- bzw. Virenreduktion im Stall möglich geworden, die die bekannten Verfahren nicht gewährleisten können. Die Ausbringung in Form feiner Tröpfchen bzw. durch Vernebelung ist zum einen Voraussetzung für eine Aufwandsmengen-minimierte Ausbringung, zum anderen wird die Reaktion mit den Schadgasen der Stallluft (insbesondere Ammoniak), aufgrund der sehr großen Oberfläche der vielen Aerosole, begünstigt.

Aufgrund der sehr einfachen und kostengünstigen Installation der in den Ansprüchen beschriebenen Anlage eignet sich das Verfahren zur "Abluftreinigen" in Stallungen, insbesondere dezentral entlüfteten Stallungen (häufige Entlüftungsmethode in Altsubstanz). Es ist speziell als Nachrüstlösung in Altsubstanz das Verfahren der Wahl. Dabei ist zum einen der Investitionsbedarf im Vergleich zu den anderen Verfahren deutlich geringer, zum anderen bietet es den Effekt verminderter Schadgas- und Schadsubstanzkonzentrationen im Stall und damit eine positive Wirkung hinsichtlich Gesundheit und Wohlbefinden von Tier und

Mensch.

In Kombination mit der Lüftungssteuerung und durch die Möglichkeit der Tieraktivitätsgeregelten Steuerung (entsprechend den Unteransprüchen), bietet das Verfahren darüber hinaus noch Optimierungspotentiale für eine verbesserte Stallklimaqualität bei gleichzeitig höherer Energieeffizienz.

### Literatur

- [1]: Schirz S.: Zum Thema "Immissionsschutz": Versuch der Geruchsbeseitigung. Landtechnik, H. 21 (1970), S. 672-673
- [2]: Pedersen S., et.al.: 2nd Report of Working Group on Climatization of Animal Houses (1992), S.111-147
- [3]: Takai H., Moeller F., Iversen M., Jorsal S.E., Bille-Hansen: Dust Control in Pig Houses by Spraying Rapeseed Oil. Transactions of the ASAE (1995), Vol. 38(5), S.1513-1518
- [4]: Zhang Y., Tanaka A., Barber E.M., Feddes J.J.R.: Effects of Frequency and Quantity of Sprinkling Canola Oil on Dust Reduction in Swine Buildings. Transactions of the ASAE (1996), Vol. 39(3), S.1077-1081
- [5]: Bönsch S., Hoy S.: Aerosolanwendung zur Senkung der Schwebstaubkonzentration. Landtechnik (1996), H. 6, S. 342-343
- [6]: Drost H., Beens N., Dolehghs B., Ellen H., Oude Vrielink H.H.E.: Is Fogging of Water or Oil Effective in Reducing Dust Concentrations in Poultry Houses?. International Symposium on Dust Control In Animal Production Facilities, Aarhus 1999, S.231-236
- [7]: Godbout S., Lemay S.P., Barber E.M., et.al.: Oil Sprinkling and Dietary Manipulation to Reduce Odour and Gas Emissions from Swine Buildings - Laboratory Scale Experiment. 6th International Symposium in Livestock environment VI (2001), S. 671-678
- [8]: Pedersen S., Takai H.: Dust Response to Animal Activity; International Symposium on Dust Control In Animal Production Facilities, Aarhus 1999, S.306-309
- [9]: Brauer: Behandlung von Abluft und Abgasen, Handbuch des Umweltschutzes und der Umweltschutztechnik Band 3 - Springer-Verlag, 1996
- [10]: Schirz S.: Abluftreinigungsverfahren in der Intensivtierhaltung, KTBL-Schrift 200 (1975)
- [11]: Aerial Environment in animal housing - Concentrations in and emissions from farm buildings, CIGR Working Group Report Series No 94.1, 1994, S. 102 ff
- [12]: Pedersen, S.: Time based variation in airborne dust in respect to animal activity In: Proceedings of the fourth International Symposium on Livestock Environment, Coventry 7/1993, S.718-725

## Patentansprüche

1. **Anlage** zur Reinigung der Stallluft in Nutztierställen und als Nachrüstlösung zur Emissionsminderung von Nutztierställen durch Einbringen von Sprühnebel einer Öl-Wasser-Emulsion, bestehend aus einem Ölgemisch aus Rapsöl, Sojaöl, Palmenöl, Kokosöl oder Sonnenblumenöl oder Mischungen aus diesen Ölen als fettem Trägeröl und eines oder mehrerer ätherischer Öle, mit:
- einer Proportionaldosiereinheit, welche das beschriebene Ölgemisch einem Wasserstrom zudosiert, wobei das Wasser als Trägermedium dient und
- einer Druckerhöhungseinheit, welche der Proportionaldosiereinheit nachgeordnet ist und Welche den Druck der Ölgemisch-Wasser-Emulsion auf ein Druckniveau von 25 bis 170 bar erhöht,
- einem Druckleitungssystem, Düsenstöcke und Düsen zur Verteilung des Gemisches bzw. der Ölgemisch- Wasser-Emulsion im Stall bzw. in den Abteilen, wobei
- die Düsen die zugeführte Ölgemisch-Wasser-Emulsion zu einem Sprühnebel verdüsen und die
- Düsen so angeordnet sind, dass im Anteil bzw. im Stall eine flächige Vernebelung/Besprühung der Ölgemisch-Wasser-Emulsion im Stallraum stattfindet.

2. Anlage nach Anspruch 1, **dadurch gekennzeichnet, dass** die Proportionaldosiereinheit eine elektromagnetische Pumpe oder eine mechanisch arbeitende Proportionaldosierpumpe aufweist.

3. Anlage nach Anspruch 1 oder 2, **dadurch gekennzeichnet, dass** die Druckerhöhungseinheit eine Kolbenpumpe oder eine mehrstufige Kreiselpumpe aufweist.

4. Anlage nach Anspruch 3, **dadurch gekennzeichnet, dass** die Pumpen Drehzahl- oder Volumengeregelt bzw. Drehzahl- oder Volumengesteuert sind oder aber Druckgeregelt bzw. Druckgesteuert sind.

5. Anlage nach einem der vorhergehenden Ansprüche, **dadurch gekennzeichnet, dass** die Düsen vorzugsweise einen feinen Sprühnebel mit Aerosoldurchmessern kleiner 50 µm erzeugen.

6. Anlage nach einem der vorhergehenden Ansprüche, **dadurch gekennzeichnet, dass** sie eine elektronische Steuerung zur Intervallschaltung der Anlage aufweist.

7. Anlage nach Anspruch 6, **dadurch gekennzeichnet, dass** die elektronische Steuerung Informationen von der Lüftungssteuerung des Stalls hinsichtlich Tieranzahl, Tiergewicht und Klimawerte zur Steuerung der Sprühintervalle verarbeitet.

8. Anlage nach Anspruch 7, **dadurch gekennzeichnet, dass** die elektronische Steuerung die auszubringende Menge in Abhängigkeit der jeweils vorherrschenden Klimawerte, der jeweils vorliegenden Tieranzahl und Tiergewichte abstimmt.

9. Anlage nach einem der Ansprüche 6 bis 8, **dadurch gekennzeichnet, dass** die elektronische Steuerung auf die Lüftungssteuerung Einfluss nimmt, derart, dass während des Sprühintervalls die Lüftung heruntergeregelt wird und nach dem Sprühen zeitverzögert wieder hochgeregelt wird.

10. Anlage nach einem der Ansprüche 6 bis 9, **dadurch gekennzeichnet, dass** die elektronische Steuerung die Signale von mindestens einem im Stall angebrachten Bewegungsmelder empfängt und derart verarbeitet, dass bei Überschreiten eines Grenzwertes die Anlage einschaltet.

11. Anlage nach einem der vorhergehenden Ansprüche, **gekennzeichnet durch** eine Ventilsteuerung, welche die wahlweise Zufuhr unterschiedlicher zuzudosierender Mittel bzw. Öl-Gemische erlaubt oder welche diese unterschiedlichen Substanzen in entsprechendem Mengenverhältnis gleichzeitig zudosiert, sodass die Anlage auch zur Sprühbefeuchtung (Verdunstungskühlung), Desinfektion oder Einweichung der Verschmutzungen eingesetzt wird.

12. Anlage nach einem der vorhergehenden Ansprüche, **gekennzeichnet durch** mindestens einen Umluftwäscher im Stall, wobei vorzugsweise ein Axialventilator die Stallluft **durch** einen Lüftwäscher fördert, in welchem die Luft mit chemischen oder organischen Substanzen behandelt wird, die nicht direkt mit den Tieren in Kontakt geraten dürfen oder aufgrund der hohen Konzentrationen einen Kontakt mit den Tieren nicht erlauben.

13. Anlage nach Anspruch 12, **dadurch gekennzeichnet, dass** der Umluftwäscher als Kreuzstrom-Sprühwäscher oder Kreuzstrom-Füllkörperwäscher ausgeführt ist, die Waschflüssigkeit im Kreislauf geführt wird, der Füllstand über ein Schwimmerventil konstant gehalten wird und die Konzentration über eine Konzentrationsregeleinheit bestehend aus Konzentrationsmesser und Proportionaldosierpumpe (die die konzentrierte Substanz je nach Bedarf aus dem Vorratsbehälter zudosiert) konstant gehalten wird.

14. Anlage nach Anspruch 12 und 13, **dadurch gekennzeichnet, dass** die Waschsubstanz im Falle beabsichtigter Ammoniakbindung organische oder anorganische Säuren enthält oder im Falle der gezielten Bekämpfung luftgetragener Mikroorganismen Desinfektionsmittel oder hochkonzentrierte ätherische Öle enthält.

15. **Verfahren** zur Reinigung der Stallluft in Nutztierställen und als Nachrüstlösung zur Emissionsminderung von Nutztierställen durch Einbringen eines Sprühnebels einer Öl-Wasser-Emulsion, bestehend aus einem Ölgemisch aus Rapsöl, Sojaöl, Palmenöl, Kokosöl oder Sonnenblumenöl oder Mischungen aus diesen Ölen als fettem Trägeröl und eines oder mehrerer ätherischer Öle, wobei die Öl-Wasser-Emulsion regelmäßig über den Tag verteilt flächig versprüht/vernebelt wird zur quasikontinuierlichen Bindung bzw. Neutralisierung der Schadsubstanz Staub und der Schadgase Ammoniak und Gerüche im allgemeinen und zur quasikontinuierlichen Abtötung bzw. Hemmung von Wachstum und/oder Vermehrung von Bakterien, Pilzen und Viren in der Stallluft.

16. Verfahren nach Anspruch 15, **dadurch gekennzeichnet, dass** die Ölgemisch-Wasser-Emulsion zu einem feinen Sprühnebel mit Aerosoldurchmessern kleiner 50 µm verdüst wird.

17. Verfahren nach Anspruch 15 oder 16, **dadurch gekennzeichnet, dass** über den Tag verteilt 12 bis 96 Mal die Wasser-Ölgemisch-Emulsion im Stall versprüht/vernebelt wird und die ausgebrachte Menge auf die jeweils vorherrschenden Klimawerte, Tieranzahlen und Tiergewichte abgestimmt wird.

18. Verfahren nach einem der vorherigen Ansprüche, **dadurch gekennzeichnet, dass** die Lüftungssteuerung des Stalles derart in das Verfahren eingebunden wird, dass während des Sprühintervalls die Lüftung heruntergeregelt wird und nach dem Sprühen zeitverzögert wieder hochgeregelt wird.

19. Verfahren nach Anspruch 18, **dadurch gekennzeichnet, dass** die Signale von mindestens einem im Stall installierten Bewegungsmelder das Einsetzen der Anlage auslösen können, derart, dass die durch die erhöhte Tieraktivität entstehenden Schadsubstanzen sofort gebunden werden können.

20. **Verwendung einer Öl-Wasser-Emulsion**, bestehend einem Ölgemisch aus Rapsöl, Sojaöl, Palmenöl, Kokosöl oder Sonnenblumenöl oder Mischungen aus diesen Ölen als fettem Trägeröl und eines oder mehrerer ätherischer Öle für die Reinigung der Stallluft in Nutztierställen mittels Sprühnebel, wobei
- diese Ölemulsion die Staubpartikel, Mikroorganismen, Schadgase und Gerüche bindet, und sich als feiner Film auf den Oberflächen im Stall ablagert und
- diese Ölemulsion Bakterien, Pilze und Viren abtötet bzw. deren Vermehrung oder Wachstum hemmt.

21. Ölmischung nach Anspruch 20, **dadurch gekennzeichnet, dass** sich das Ölgemisch zusammensetzt aus 20-70% Rapsöl, Sojaöl, Palmenöl, Kokosöl oder Sonnenblumenöl oder Mischungen aus diesen Ölen als fettem Trägeröl, 10-30% Emulgator oder Emulgatormischungen auf biologischer Basis und 5-15% Ätherisches Öl und/oder Mischungen aus Ätherischen Ölen.

22. Ölmischung nach Anspruch 20 oder 21, **dadurch gekennzeichnet, dass** die ätherischen Öle aus Cajeput, Thymian, Eukalypthus oder Citronenöl bestehen.

23. Ölmischung nach Anspruch 20, **dadurch gekennzeichnet, dass** der biologische Emulgator gleichzeitig als Trägeröl fungiert, so dass sich das Ölgemisch demgemäß aus bis zu 90% Emulgator und 10% ätherischen Ölen zusammensetzt.

24. Ölmischung nach Anspruch 20 bis 22, **dadurch gekennzeichnet, dass** der Anteil der ätherischen Öle am Ölgemisch je nach mikrobieller Belastung des Stalles auf bis zu 40% Mischungsanteil erhöht werden kann.

## Claims

1. System for cleaning the air in livestock houses, and to serve as a retrofit solution for reducing emissions from livestock houses, by introducing an oil/water emulsion as a sprayed mist, the oil/water emulsion comprising a mixture of rape-seed oil, soya-bean oil, palm oil, coconut oil or sunflower-seed oil or mixtures of these oils as fatty oil serving as a vehicle, and one or more essential oils, having:
- a proportional metering unit which meters the oil mixture described into a flow of water, the water acting as a continuous phase, and
- a pressure-raising unit which is positioned downstream of the proportional metering unit and which raises the pressure of the oil mixture/water emulsion to a level of 25 to 170 bar,
- a pressurised piping system, nozzle connections and nozzles for distributing the mixture, i.e. the oil mixture/water emulsion, in the house or its compartments, with
- the nozzles atomising the oil mixture/water emulsion fed to them into a sprayed mist and the
- nozzles being so arranged that, in the compartment or the house, the atomisation/spraying of the oil mixture/water emulsion which takes place is spread over an area in the space within the house.

2. System according to claim 1, **characterised in that** the proportional metering unit has an electromagnetic pump or a mechanically operating proportional metering pump

3. System according to claim 1 or 2, **characterised in that** the pressure-raising unit has a piston pump or a multi-stage centrifugal pump.

4. System according to claim 3, **characterised in that** the pumps are regulated as to speed or volume or are controlled as to speed or volume or else are regulated or controlled as to pressure.

5. System according to one of the foregoing claims, **characterised in that** the nozzles preferably produce a fine sprayed mist having aerosol diameters of less than 50 µm.

6. System according to one of the foregoing claims, **characterised in that** it has an electronic control system for switching the system at intervals.

7. System according to claim 6, **characterised in that** the electronic control system processes information from the system controlling the ventilation of the house relating to numbers of animals, weights of animals and climatic-condition values to allow the spraying intervals to be controlled.

8. System according to claim 7, **characterised in that** the electronic control system adjusts the quantity to be dispensed as a function of the climatic-condition values prevailing at the time and the animal numbers and animal weights which exist at the time.

9. System according to one of claims 6 to 8, **characterised in that** the electronic control system acts on the system controlling ventilation in such a way that ventilation is regulated down during the spraying period and is regulated up again, with a delay, after the spraying.

10. System according to one of claims 6 to 9, **characterised in that** the electronic control system receives the signals from at least one movement sensor mounted in the house and processes them in such a way that the system is switched on if a limiting value is exceeded.

11. System according to one of the foregoing claims, **characterised by** a valve control system which allows different media or oil mixtures for metering-in to be fed in if desired, or which meters in these different substances at the same time in an appropriate quantitative ratio, so that the system is also used for spray humidification (evaporative cooling), disinfection, or softening of fouling.

12. System according to one of the foregoing claims, **characterised by** at least one washer of recirculated air in the house, there being a fan, preferably axial, which feeds the air from the house through an air washer in which the air is treated with chemical or organic substances which may not come into direct contact with the animals or which do not permit contact with the animals due to their high concentrations.

13. System according to claim 12, **characterised in that** the washer of recirculated air takes the form of a cross-flow spray washer or cross-flow packed bed washer, the washing liquid is fed in a circuit, level is held constant by means of a float valve, and concentration is held constant by means of a concentration regulating unit comprising a concentration meter and a proportional metering pump (which meters in the concentrated substance as required from the supply container).

14. System according to claim 12 and 13, **characterised in that** the washing substance contains organic or inorganic acids where the binding of ammonia is intended, or contains disinfectants or highly concentrated essential oils where airborne micro-organisms are to be controlled in a targeted way.

15. Method of cleaning the air in livestock houses, and to provide a retrofit solution for reducing emissions from livestock houses, by introducing an oil/water emulsion as a sprayed mist, the oil/water emulsion comprising a mixture of rape-seed oil, soya-bean oil, palm oil, coconut oil or sunflower-seed oil or mixtures of these oils as fatty oil serving as a vehicle, and one or more essential oils, wherein the oil/water emulsion is sprayed/atomised over an area at times spread regularly over the day, for the quasi-continuous binding or neutralising of the pollutant substance dust and the pollutant gases ammonia and odours in general, and for the quasi-continuous eradication or inhibition of the growth and/or reproduction of bacteria, fungi and viruses in the air of the houses.

16. Method according to claim 15, **characterised in that** the oil mixture/water emulsion is atomised into a fine sprayed mist having aerosol diameters of less than 50 µm.

17. Method according to claim 15 or 16, **characterised in that** the oil mixture/water emulsion is sprayed/atomised in the house 12 to 96 times spread over the day, and the amount dispensed is adjusted to suit the climatic-condition values, numbers of animals and weights of animals which exist at the time.

18. Method according to one of the foregoing claims, **characterised in that** house's ventilation control system is included in the method in such a way that the ventilation is regulated down during the spraying period and is regulated up again, with a delay, after the spraying.

19. Method according to claim 18, **characterised in that** the signals from at least one movement sensor installed in the house are able to trigger the operation of the system, in such a way that the pollutant substances which are produced by increased animal activity can at once be bound.

20. Use of an oil/water emulsion comprising a mixture of rape-seed oil, soya-bean oil, palm oil, coconut oil or sunflower-seed oil or mixtures of these oils as fatty oil serving as a vehicle, and one or more essential oils, for cleaning the air in livestock houses by means of a sprayed mist, wherein
- the said oil emulsion binds the dust particles, micro-organisms, pollutant gases and odours, and deposits as a fine film on the surfaces in the house, and
- the said oil emulsion eradicates bacteria, fungi and viruses or inhibits their reproduction or growth.

21. Oil mixture according to claim 20, **characterised in that** the oil mixture is composed of 20-70% of rape-seed oil, soya-bean oil, palm oil, coconut oil or sunflower-seed oil or mixtures of these oils as fatty oil serving as a vehicle, 10-30% of emulsifier or emulsifier mixtures on a biological basis, and 5-15% of essential oil and/or mixtures of essential oils.

22. Oil mixture according to claim 20 or 21, **characterised in that** the essential oils comprise cajeput, thyme, eucalyptus or citronella oil.

23. Oil mixture according to claim 20, **characterised in that** the biological emulsifier acts as a vehicle oil at the same time, and the oil mixture is therefore composed of up to 90% of emulsifier and 10% of essential oils.

24. Oil mixture according to claims 20 to 22, **characterised in that** the proportion of essential oils in the oil mixture can be increased to up to a 40% proportion of the mixture depending on the microbial contamination in the house.

## Revendications

1. Dispositif servant à la purification de l'air dans des étables pour animaux de rente et en tant que solution pouvant être rajoutée ultérieurement, à la réduction des émissions des étables pour animaux de rente par introduction d'un brouillard de pulvérisation d'une émulsion huile - eau, composée d'un mélange d'huile formé d'huile de colza, d'huile de soja, d'huile de palme, d'huile de coco ou d'huile de tournesol ou de mélanges de ces huiles sous forme d'huile support grasse et d'une ou de plusieurs huiles essentielles, comprenant :
- une unité de dosage proportionnel, laquelle ajoute le mélange d'huile décrit de manière dosée à un flux d'eau, l'eau servant de milieu support et
- une unité d'augmentation de la pression, laquelle est agencée en aval de l'unité de dosage proportionnel et laquelle augmente la pression de l'émulsion mélange d'huile - eau à un niveau de pression de 25 à 170 bar,
- un système de conduites de refoulement, des porte-buse et des buses pour la distribution du mélange ou de l'émulsion mélange d'huile - eau dans l'étable ou dans les box,
- les buses atomisant l'émulsion mélange d'huile - eau amenée en un brouillard de pulvérisation et
- les buses étant agencées de sorte que dans le box ou dans l'étable une nébulisation / pulvérisation étendue de l'émulsion mélange d'huile - eau a lieu à l'intérieur l'étable.

2. Installation selon la revendication 1, **caractérisée en ce que** l'unité de dosage proportionnel présente une pompe électromagnétique ou une pompe de dosage proportionnel à fonctionnement mécanique.

3. Installation selon la revendication 1 ou 2, **caractérisée en ce que** l'unité d'augmentation de la pression présente une pompe à piston ou une pompe centrifuge à plusieurs étages.

4. Installation selon la revendication 3, **caractérisée en ce que** les pompes sont régulées par vitesse de rotation ou par volume ou commandées par vitesse de rotation ou par volume ou bien sont régulées par pression ou commandées par pression.

5. Installation selon l'une quelconque des revendications précédentes, **caractérisée en ce que** les buses génèrent de préférence un brouillard de pulvérisation fin avec des aérosols de diamètres inférieurs à 50 µm.

6. Installation selon l'une quelconque des revendications précédentes, **caractérisée en ce qu'**elle présente une commande électronique pour la commutation d'intervalle de l'installation.

7. Installation selon la revendication 6, **caractérisée en ce que** la commande électronique traite des informations de la commande de ventilation de l'étable relatives au nombre d'animaux, au poids des animaux et aux valeurs climatiques pour la commande des intervalles de pulvérisation.

8. Installation selon la revendication 7, **caractérisée en ce que** la commande électronique adapte la quantité à émettre en fonction des valeurs climatiques dominantes, du nombre d'animaux et du poids des animaux respectivement en présence.

9. Installation selon l'une quelconque des revendications 6 à 8, **caractérisée en ce que** la commande électronique influence la commande de ventilation de telle sorte que la ventilation est réglée à un niveau inférieur pendant l'intervalle de pulvérisation et est à nouveau réglée à un niveau supérieur de manière temporisée après la pulvérisation.

10. Installation selon l'une quelconque des revendications 6 à 9, **caractérisée en ce que** la commande électronique reçoit les signaux d'au moins un détecteur de mouvement installé dans l'étable et les traite de telle sorte qu'en cas de dépassement d'une valeur limite l'installation se déclenche.

11. Installation selon l'une quelconque des revendications précédentes, **caractérisée par** une commande de soupape, qui permet d'amener au choix différents agents ou mélanges d'huile à ajouter de manière dosée ou qui ajoute en même temps ces différentes substances de manière dosée dans un rapport quantitatif correspondant de sorte que l'installation est aussi employée pour l'humidification par pulvérisation (refroidissement par évaporation), la désinfection ou le trempage des encrassements.

12. Installation selon l'une quelconque des revendications précédentes, **caractérisée par** au moins un laveur d'air de circulation dans l'étable, dans lequel de préférence un ventilateur axial fait circuler l'air de l'étable à travers un laveur d'air, dans lequel l'air est traité avec des substances chimiques ou organiques qui ne doivent pas entrer en contact direct avec les animaux ou qui ne permettent pas un contact avec les animaux en raison des concentrations élevées.

13. Installation selon la revendication 12, **caractérisée en ce que** le laveur d'air de circulation est réalisé sous forme de laveur par pulvérisation à courant croisé ou de laveur à corps de remplissage à courant croisé, le liquide de lavage est conduit en circuit fermé, le niveau de remplissage est maintenu constant par le biais d'un robinet-flotteur et la concentration est maintenue constante par le biais d'une unité de régulation de concentration composée d'un dispositif de mesure de concentration et d'une pompe de dosage proportionnel (qui ajoute la substance concentrée de manière dosée en fonction des besoins depuis le réservoir).

14. Installation selon les revendications 12 et 13, **caractérisée en ce que** la substance de lavage contient, dans le cas d'une liaison ammoniac voulue, des acides organiques ou anorganiques ou, dans le cas de la lutte ciblée contre des microorganismes aérotransportés, des désinfectants ou des huiles essentielles à forte concentration.

15. Procédé servant à la purification de l'air dans des étables pour animaux de rente et en tant que solution pouvant être rajoutée ultérieurement, à la réduction des émissions des étables pour animaux de rente par introduction d'un brouillard de pulvérisation d'une émulsion huile-eau, composée d'un mélange d'huile formé d'huile de colza, d'huile de soja, d'huile de palme, d'huile de coco ou d'huile de tournesol ou de mélanges de ces huiles sous forme d'huile support grasse et d'une ou de plusieurs huiles essentielles, dans lequel l'émulsion huile-eau est pulvérisée/nébulisée régulièrement au cours de la journée de manière étendue pour la liaison ou la neutralisation quasi-continue de la substance nocive qu'est la poussière et des gaz nocifs (ammoniac) et des odeurs de manière générale et pour l'élimination ou l'inhibition quasi-continue de la croissance et/ou de la multiplication de bactéries, de champignons et de virus dans l'air de l'étable.

16. Procédé selon la revendication 15, **caractérisé en ce que** l'émulsion mélange d'huile-eau est atomisée en un brouillard de pulvérisation fin avec des aérosols de diamètres inférieurs à 50 µm.

17. Procédé selon la revendication 15 ou 16, **caractérisé en ce que** l'émulsion d'eau-mélange d'huile est pulvérisée/nébulisée dans l'étable de 12 à 96 fois au cours de la journée et la quantité émise est adaptée aux valeurs climatiques dominantes, au nombre d'animaux et au poids des animaux.

18. Procédé selon l'une quelconque des revendications précédentes, **caractérisé en ce que** la commande de ventilation de l'étable est intégrée dans le procédé de telle manière que la ventilation est réglée à un niveau inférieur pendant l'intervalle de pulvérisation et est à nouveau réglée à un niveau supérieur de manière temporisée après la pulvérisation.

19. Procédé selon la revendication 18, **caractérisé en ce que** les signaux d'au moins un détecteur de mouvement installé dans l'étable peuvent déclencher la mise en marche de l'installation de telle sorte que les substances nocives émanant de l'activité accrue des animaux peuvent être immédiatement liées.

20. Utilisation d'une émulsion huile-eau, composée d'un mélange d'huile formé d'huile de colza, d'huile de soja, d'huile de palme, d'huile de coco ou d'huile de tournesol ou de mélanges de ces huiles sous forme d'huile support grasse et d'une ou de plusieurs huiles essentielles pour la purification de l'air dans des étables pour animaux de rente à l'aide d'un brouillard de pulvérisation, dans lequel
- cette émulsion d'huile lie les particules de poussière, les microorganismes, les gaz nocifs et les odeurs et se dépose sous forme de film fin sur les surfaces dans l'étable et
- cette émulsion d'huile tue les bactéries, les champignons et les virus ou inhibe leur multiplication ou leur croissance.

21. Mélange d'huile selon la revendication 20, **caractérisé en ce que** le mélange d'huile se compose à 20 - 70% d'huile de colza, d'huile de soja, d'huile de palme, d'huile de coco ou d'huile de tournesol ou de mélanges de ces huiles sous forme d'huile support grasse, à 10 - 30% d'émulsifiant ou de mélanges d'émulsifiants à base biologique et à 5 - 15% d'huile essentielle et/ou de mélanges d'huiles essentielles.

22. Mélange d'huile selon la revendication 20 ou 21, **caractérisé en ce que** les huiles essentielles se composent de cajeput, de thym, d'eucalyptus ou d'huile de citron.

23. Mélange d'huile selon la revendication 20, **caractérisé en ce que** l'émulsifiant biologique fonctionne en même temps comme huile support, si bien que le mélange d'huile se compose par conséquent de jusqu'à 90% d'émulsifiant et de 10% d'huiles essentielles.

24. Mélange d'huile selon les revendications 20 à 22, **caractérisé en ce que** la part des huiles essentielles du mélange d'huile peut être augmentée en fonction de la charge microbienne de l'étable pour atteindre 40% du mélange.
